(19)

Europäisches
Patentamt
European
Patent Office
Office européen
des brevets

(11) **EP 4 210 127 A1**

(12) **EUROPEAN PATENT APPLICATION**
published in accordance with Art. 153(4) EPC

(43) Date of publication:
**12.07.2023 Bulletin 2023/28**

(21) Application number: **21864309.6**

(22) Date of filing: **31.08.2021**

(51) International Patent Classification (IPC):
*H01M 4/13* (2010.01)      *H01M 4/131* (2010.01)
*H01M 4/139* (2010.01)      *H01M 4/62* (2006.01)

(52) Cooperative Patent Classification (CPC):
**H01M 4/13; H01M 4/131; H01M 4/139; H01M 4/62;**
Y02E 60/10

(86) International application number:
**PCT/JP2021/031851**

(87) International publication number:
**WO 2022/050251 (10.03.2022 Gazette 2022/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.09.2020 JP 2020146852**

(71) Applicant: **Daikin Industries, Ltd.**
**Osaka-shi, Osaka 530-0001 (JP)**

(72) Inventors:
• **YAMADA, Takaya**
**Osaka-shi, Osaka 530-8323 (JP)**

• **YAMADA, Masahiko**
**Osaka-shi, Osaka 530-8323 (JP)**
• **YAMAZAKI, Shigeaki**
**Osaka-shi, Osaka 530-8323 (JP)**
• **TERADA, Junpei**
**Osaka-shi, Osaka 530-8323 (JP)**
• **FUJIWARA, Kae**
**Osaka-shi, Osaka 530-8323 (JP)**
• **HIRAGA, Kentarou**
**Osaka-shi, Osaka 530-8323 (JP)**
• **SUI, Xianwei**
**Osaka-shi, Osaka 530-8323 (JP)**

(74) Representative: **Hoffmann Eitle**
**Patent- und Rechtsanwälte PartmbB**
**Arabellastraße 30**
**81925 München (DE)**

(54) **ELECTRODE MIXTURE FOR SECONDARY BATTERIES, ELECTRODE MIXTURE SHEET FOR SECONDARY BATTERIES, METHOD OF PRODUCTION FOR SAME, AND SECONDARY BATTERY**

(57)    Provided is a secondary battery electrode mixture having good properties, a secondary battery electrode mixture sheet containing the electrode mixture, and a secondary battery using the secondary battery electrode mixture sheet. Also provided is a method for producing an electrode mixture sheet containing a polytetrafluoroethylene resin having a fine fiber structure. The secondary battery electrode mixture includes an electrode active material and a binder. The binder is a polytetrafluoroethylene resin, and the polytetrafluoroethylene resin has a fibrous structure with a fibril diameter (median value) of 70 nm or less. In addition, the secondary battery electrode mixture sheet contains that electrode mixture.

[Figure 1]

S4800 3.0kV 8.5mm x7.00k SE(M)          5.00um

EP 4 210 127 A1

**Description**

Technical Field

The present disclosure relates to a secondary battery electrode mixture, a secondary battery electrode mixture sheet and a production method thereof, and a secondary battery.

Background Art

For a lithium ion secondary battery, it is common to produce an electrode mixture by coating a slurry obtained by mixing an electrode active material and a conductive aid with a binder and a solvent and then drying.

Meanwhile, a polytetrafluoroethylene resin is a polymer that readily forms fibrils, and when fibrillated is also used as a binder.

Patent Literature 1 discloses a method for producing an electrode in which polytetrafluoroethylene is fibrillated by subjecting a mixture including an active material and a polytetrafluoroethylene composite binder material to a high shear treatment with a jet mill.

Citation List

Patent Literature

Patent Literature 1: Japanese Translation of PCT International Application Publication No. 2017-517862

Summary of Invention

Technical Problem

An object of the present disclosure is to provide a secondary battery electrode mixture having good properties, a secondary battery electrode mixture sheet containing the electrode mixture, and a secondary battery using the electrode mixture sheet.

Another object of the present disclosure is to provide a method for producing an electrode mixture sheet containing a polytetrafluoroethylene resin having a fine fiber structure.

Solution to Problem

The present disclosure relates to a secondary battery electrode mixture comprising an electrode active material and a binder, wherein the binder is a polytetrafluoroethylene resin, and the .polytetrafluoroethylene resin has a fibrous structure with a fibril diameter (median value) of 70 nm or less.

It is preferred that the secondary battery electrode mixture is for a lithium ion battery.

It is preferred that the secondary battery electrode mixture is a secondary battery electrode mixture obtained using a raw material composition including an electrode active material and a binder, wherein the binder in the raw material composition is a powdered polytetrafluoroethylene resin.

It is preferred that the raw material composition is substantially free of a liquid medium.

It is preferred that the powdered polytetrafluoroethylene resin has a moisture content of 500 ppm or less.

It is preferred that the powdered polytetrafluoroethylene resin has a standard specific gravity of 2.11 to 2.20.

It is preferred that the powdered polytetrafluoroethylene resin includes 50% by mass or more of a polytetrafluoroethylene resin having a secondary particle size of 500 $\mu$m or more.

It is preferred that the powdered polytetrafluoroethylene resin includes 80% by mass or more of a polytetrafluoroethylene resin having a secondary particle size of 500 $\mu$m or more.

The present disclosure also relates to a secondary battery electrode mixture sheet comprising the above-described secondary battery electrode mixture.

It is preferred that the secondary battery electrode mixture sheet is for a negative electrode, and an electrode active material includes silicon as a constituent element.

It is preferred that the secondary battery electrode mixture sheet is for a positive electrode and has a density of 3.00 g/cc or more.

It is preferred that the secondary battery electrode mixture sheet is for a negative electrode and has a density of 1.3 g/cc or more.

The present disclosure also relates to a method for producing a secondary battery electrode mixture sheet comprising:

(1) applying a shear force while mixing a raw material composition including an electrode active material and a binder;
(2) forming the electrode mixture obtained in (1) into a bulk shape; and
(3) rolling the bulk-shape electrode mixture obtained in (2) into a sheet shape,

wherein the binder is a powdered polytetrafluoroethylene resin.

The present disclosure also relates to a secondary battery including the above-described secondary battery electrode mixture sheet.

Advantageous Effects of Invention

In the present disclosure, an electrode mixture for obtaining an electrode having excellent flexibility and performance can be produced. For this reason, the battery can have a high initial capacity, low resistance, and low gas generation. Further, according to the production method of the present disclosure, it is possible to manufacture an electrode mixture sheet for producing an electrode having excellent flexibility and a battery having excellent performance.

Brief Description of Drawing

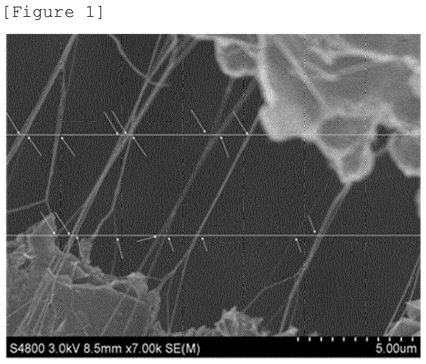

[Figure 1] Figure 1 is a scanning electron microscope photograph showing the state of the cross section of the negative electrode mixture sheet used in Example 5.

Description of Embodiments

The present disclosure will now be described in detail.

The present disclosure provides an electrode mixture used for a secondary battery. Particularly provided is an electrode mixture that can be suitably used in the type of a secondary battery which uses an electrolytic solution.

In the electrode mixture of the present disclosure, polytetrafluoroethylene resin (PTFE) is used as a binder. For a conventional secondary battery electrode mixture, a common method to prepare the electrode mixture is to use a resin that dissolves in a solvent, such as polyvinylidene fluoride, as a binder, and coat and dry a slurry containing such a binder.

It is known that when shear stress is applied to PTFE in a powder state, the PTFE readily forms fibrils. By utilizing this property of readily forming fibrils, PTFE can be used as a binder. That is, the fibrillated PTFE entangles other powder components and the like to bind the powder components, thereby PTFE acts as a binder upon forming of the powder components.

However, even when fibrillated PTFE is used as a binder, if the fibrillation is not sufficient, a good performance cannot be exhibited when used as an electrode mixture. In the present disclosure, taking this point into consideration, the PTFE is formed into fine fibrils so as to have a fibrous structure with a fibril diameter (median value) of 70 nm or less. When such a fibrillated PTFE is used as a binder for the electrode mixture, a good performance can be exhibited.

That is, the present disclosure has been completed based on the discovery that when PTFE is used as a binder, by using PTFE having a fine fiber structure, an electrode mixture having good properties can be obtained.

The electrode mixture of the present disclosure is obtained using a raw material composition including an electrode active material and a binder. The binder is preferably powdered PTFE. By using PTFE powder as a raw material instead of a PTFE water dispersion, there is little moisture derived from the raw material in the electrode mixture, and so problems due to the mixing of water do not occur. As a result, there is also the advantage that battery performance can be improved.

In addition, it is preferred that the above-described raw material composition is substantially free of a liquid medium. Thus, the electrode mixture of the present disclosure has the advantage that a solvent is not used in its production. In other words, in the conventional method for producing an electrode mixture, it is common to prepare a slurry in which a powder, which is a component of the electrode mixture, is dispersed by using a solvent in which a binder is dissolved, and then prepare the electrode mixture by coating and drying the slurry. In this case, a solvent for dissolving the binder is used. However, the solvents capable of dissolving polyvinylidene fluoride, which is the binder resin having conventionally been used, are limited to specific solvents such as N-methylpyrrolidone. For this reason, an expensive solvent needs to be used, causing to raise costs.

The electrode mixture of the present disclosure has, as a constituent element, PTFE having a fibrous structure with a fibril diameter (median value) of 70 nm or less. In the present disclosure, it is important that the fibril diameter (median value) is 70 nm or less. Thus, the object of the present invention is achieved by having PTFE with a small fibril diameter be present in the electrode mixture, which is flexible and acts to bind the powders of the components constituting the electrode mixture.

The fibril diameter (median value) is a value measured by the following method.

(1) Using a scanning electron microscope (Model S-4800, manufactured by Hitachi, Ltd.), an enlarged photograph (7,000x) of the electrode mixture sheet is taken to obtain an image.

(2) Two lines equidistant from each other are drawn on the image in the horizontal direction to divide the image into three equal parts.

(3) The diameter of each PTFE fiber on the upper straight line is measured at three locations, and the average value is taken as the PTFE fiber diameter. The three locations to be measured are the intersection between the PTFE fiber and the straight line, and the locations 0.5 $\mu$m above and below the intersection (PTFE primary particles not formed into fibrils are excluded).

(4) The task of (3) above is then carried out for all the PTFE fibers on the lower straight line.

(5) Starting from the first image, the electrode mixture sheet is moved 1 mm in the right direction of the screen, photographed again, and the diameter of the PTFE fibers is measured according to the above (3) and (4). This is repeated until the number of fibers measured exceeds 80, and then the measurement is terminated.

(6) The median value of the diameters of all the PTFE fibers measured above is taken as the size of the fibril diameter.

The fibril diameter (median value) is preferably 65 nm or less. It should be noted that excessive fibril formation tends to result in loss of flexibility. Although the lower limit is not limited, from the viewpoint of strength, the lower limit is preferably not less than 15 nm, and more preferably not less than 20 nm.

Examples of the method for obtaining PTFE having the above-described fibril diameter (median value) include, but are not limited to a method including:

a step (1) of applying a shear force while mixing a raw material composition including an electrode active material and a binder;

a step (2) of forming the electrode mixture obtained in step (1) into a bulk shape; and

a step (3) of rolling the bulk-shape electrode mixture obtained in step (2) into a sheet shape.

In such a method, for example, by setting the mixing condition of the raw material composition to 1,000 rpm or less in step (1), the fibrillation of the PTFE can be advanced while maintaining flexibility, and by controlling the shear stress to be applied, the fibril diameter (median value) of the PTFE can be made 70 nm or less.

Further, it is also preferable to have after the step (3) a step (4) of applying a larger load to the obtained roll sheet and rolling into a thinner sheet. It is also preferred to repeat step (4).

In addition, after the step (3) or step (4), the fibril diameter can be adjusted by having a step (5) of coarsely crushing the obtained roll sheet, then again forming into a bulk shape and rolling into a sheet. The step (5) is preferably repeated, for example, 1 or more times and 12 or less times.

That is, the electrode mixture can be produced by applying a shear force to fibrillate the PTFE powder, which becomes entangled with the powder components such as the electrode active material. This production method is described later.

In the present disclosure, the PTFE is not limited, and may be a homopolymer or a copolymer that can be fibrillated, but a homopolymer is more preferred.

In the case of a copolymer, examples of fluorine atom-containing monomers that are co-monomers include chlorotrifluoroethylene, hexafluoropropylene, fluoroalkylethylene, perfluoroalkylethylene, fluoroalkyl-fluorovinyl ether, and the like.

The above-described "PTFE powder" means a solid state as a powder, not a dispersed state mixed with a liquid medium. The object of the present disclosure can be suitably achieved by producing an electrode mixture using PTFE in such a state, which is a state in which a liquid medium is not present.

It is preferred that the powdered PTFE serving as the raw material for preparing the electrode mixture of the present disclosure has a moisture content of 500 ppm or less.

A moisture content of 500 ppm or less is preferred from the viewpoint of producing a secondary battery with reduced gas generation as an initial characteristic.

More preferably, the moisture content is 300 ppm or less.

The powdered PTFE serving as the raw material for preparing the electrode mixture of the present disclosure preferably has a standard specific gravity of 2.11 to 2.20. Having a standard specific gravity within the above range is advantageous in that an electrode mixture sheet having a high strength can be produced. The lower limit of the standard specific gravity is more preferably not less than 2.12. The upper limit of the standard specific gravity is more preferably not more than 2.19, and even more preferably not more than 2.18.

The standard specific gravity (SSG) is measured by preparing a sample according to ASTM D-4895-89, and measuring the specific gravity of the obtained sample by the water displacement method.

The powdered PTFE includes preferably 50% by mass or more, and more preferably 80% by mass or more, of PTFE having a secondary particle size of 500 $\mu$m or more. When the PTFE having a secondary particle size of 500 $\mu$m or more is within the above range, there is an advantage that a high-strength electrode mixture sheet can be produced.

By using PTFE with a secondary particle size of 500 $\mu$m or more, it is possible to obtain an electrode mixture sheet with lower resistance and high toughness.

The lower limit of the secondary particle size of the powdered PTFE is more preferably 300 $\mu$m, and further preferably 350 $\mu$m. The upper limit of the secondary particle size is more preferably not more than 700 $\mu$m, and further preferably not more than 600 $\mu$m. The secondary particle size can be determined, for example, by a sieving method.

The powdered PTFE has an average primary particle size of preferably 150 nm or more because this allows an electrode mixture sheet having higher strength and excellent homogeneity to be obtained. More preferably, the average primary particle size is 180 nm or more, further preferably 210 nm or more, and particularly preferably 220 nm or more.

The larger the average primary particle size of the PTFE, the more the extrusion pressure can be suppressed and the better the formability is upon extrusion the powder. The upper limit may be 500 nm, but is not limited thereto. From the viewpoint of productivity in the polymerization step, the upper limit is preferably 350 nm.

The average primary particle size can be determined by, using an aqueous dispersion of PTFE obtained by polymerization, creating a calibration curve plotting the transmission of 550 nm incident light with respect to the unit length of the aqueous dispersion having a polymer concentration adjusted to 0.22% by mass versus the average primary particle size determined by measuring the directional diameter in a transmission-type electron micrograph, and measuring the transmission of the aqueous dispersion to be measured.

The PTFE used in the present disclosure may have a core-shell structure. Examples of PTFE having a core-shell structure include a polytetrafluoroethylene that includes in the particle a core of high molecular weight polytetrafluoroethylene and a shell of a lower molecular weight polytetrafluoroethylene or modified polytetrafluoroethylene. Examples of the polytetrafluoroethylene include the polytetrafluoroethylenes described in Japanese Translation of PCT International Application Publication No. 2005-527652.

Powdered PTFE that satisfies each of the above-described parameters can be obtained by a conventional manufacturing method. For example, such powdered PTFE may be produced in accordance with the production methods described in International Publication No. WO 2015-080291, International Publication No. WO 2012-086710, and the like.

The secondary battery electrode mixture of the present disclosure contains an electrode active material, a binder and the like. The binder content is preferably 0.2 to 10% by mass, and more preferably 0.3 to 6.0% by mass, in the secondary battery electrode mixture. If the binder is within the above range, it is possible to form a self-supporting sheet having excellent handleability while suppressing an increase in electrode resistance.

Moreover, the secondary battery electrode mixture of the present disclosure may optionally contain a conductive aid.

The electrode active material, conductive aid, and the like will be described below.

(Electrode active material)

The positive electrode active material is not limited as long as it can electrochemically occlude and release alkali metal ions. For example, a material containing an alkali metal and at least one transition metal is preferred. Specific examples include alkali metal-containing transition metal composite oxides, alkali metal-containing transition metal phosphate compounds, conductive polymers, and the like.

Among them, as the positive electrode active material, an alkali metal-containing transition metal composite oxide that produces a high voltage is particularly preferable. Examples of the alkali metal ions include lithium ions, sodium ions, and potassium ions. In a preferred embodiment, the alkali metal ions may be lithium ions. That is, in this embodiment, the alkali metal ion secondary battery is a lithium ion secondary battery.

Examples of the alkali metal-containing transition metal composite oxide include:

an alkali metal-manganese spinel composite oxide represented by the formula:

$$M_aMn_{2-b}M^1{}_bO_4$$

wherein M is at least one metal selected from the group consisting of Li, Na and K, $0.9 \leq a$; $0 \leq b \leq 1.5$, and $M^1$ is at least one metal selected from the group consisting of Fe, Co, Ni, Cu, Zn, Al, Sn, Cr, V, Ti, Mg, Ca, Sr, B, Ga, In, Si, and Ge,
an alkali metal-nickel composite oxide represented by the formula:

$$MNi_{1-c}M^2cO_2$$

wherein M is at least one metal selected from the group consisting of Li, Na and K, $0 \leq c \leq 0.5$, and $M^2$ is at least one metal selected from the group consisting of Fe, Co, Mn, Cu, Zn, Al, Sn, Cr, V, Ti, Mg, Ca, Sr, B, Ga, In, Si, and Ge, or an alkali metal-cobalt composite oxide represented by the formula:

$$MCo_{1-d}M^3{}_dO_2$$

wherein M is at least one metal selected from the group consisting of Li, Na and K, $0 \leq d \leq 0.5$, and $M^3$ is at least one metal selected from the group consisting of Fe, Ni, Mn, Cu, Zn, Al, Sn, Cr, V, Ti, Mg, Ca, Sr, B, Ga, In, Si, and Ge.

In the above, M is preferably one metal selected from the group consisting of Li, Na and K, more preferably Li or Na, and further preferably Li.

Among these, from the viewpoint of being able to provide a secondary battery with high energy density and high output, $MCoO_2$, $MMnO_2$, $MNiO_2$, $MMn_2O_4$, $MNi_{0.8}Co_{0.15}Al_{0.05}O_2$, $MNi_{1/3}Co_{1/3}Mn_{1/3}O_2$ and the like are preferable, and a compound represented by the following general formula (3) is preferred:

$$MNi_hCo_iMn_jM^5{}_kO_2 \qquad (3)$$

wherein M is at least one metal selected from the group consisting of Li, Na and K; $M^5$ represents at least one selected from the group consisting of Fe, Cu, Zn, Al, Sn, Cr, V, Ti, Mg, Ca, Sr, B, Ga, In, Si, and Ge, $(h+i+j+k)=1.0$, $0 \leq h \leq 1.0$, $0 \leq i \leq 1.0$, $0 \leq j \leq 1.5$, and $0 \leq k \leq 0.2$.

Examples of the alkali metal-containing transition metal phosphate compound include compounds represented by the following formula (4):

$$M_eM^4{}_f(PO_4)_g \qquad (4)$$

wherein M is at least one metal selected from the group consisting of Li, Na and K, $M^4$ is at least one selected from the group consisting of V, Ti, Cr, Mn, Fe, Co, Ni, and Cu, $0.5 \leq e \leq 3$, $1 \leq f \leq 2$, and $1 \leq g \leq 3$.

In the above, M is preferably one metal selected from the group consisting of Li, Na and K, more preferably Li or Na, and further preferably Li.

The transition metal of the lithium-containing transition metal phosphate compound is preferably V, Ti, Cr, Mn, Fe, Co, Ni, Cu, or the like. Specific examples include iron phosphates such as $LiFePO_4$, $Li_3Fe_2(PO_4)_3$, and $LiFeP_2O_7$, cobalt phosphates such as $LiCoPO_4$, and lithium-containing transition metal phosphate compounds in which a part of the transition metal atoms that are the main component of these lithium-transition metal phosphate compounds is replaced with another element such as Al, Ti, V, Cr, Mn, Fe, Co, Li, Ni, Cu, Zn, Mg, Ga, Zr, Nb, or Si.

The lithium-containing transition metal phosphate compound preferably has an olivine structure.

Examples of other positive electrode active materials include $MFePO_4$, $MNi_{0.8}Co_{0.2}O_2$, $M_{1.2}Fe_{0.4}Mn_{0.4}O_2$, $MNi_{0.5}Mn_{1.5}O_2$, $MV_3O_6$, and $M_2MnO_3$ (where M is at least one metal selected from the group consisting of Li, Na and K) and the like. In particular, positive electrode active materials such as $M_2MnO_3$ and $MNi_{0.5}Mn_{1.5}O_2$ are preferable from the viewpoint that the crystal structure does not collapse when the secondary battery is operated at a voltage exceeding 4.4 V or 4.6 V or higher. Therefore, electrochemical devices such as secondary batteries using a positive electrode material including the positive electrode active material exemplified above are preferable because even when they are stored at high temperatures, they are less likely to suffer a decrease in remaining capacity, less likely to undergo a change in resistance increase rate, and do not suffer from a decrease in battery performance even when operated at a high voltage.

Examples of other positive electrode active materials include a solid solution material of $M_2MnO_3$ with $MM^6O_2$ (where M is at least one metal selected from the group consisting of Li, Na and K, and $M^6$ is a transition metal such as Co, Ni, Mn, or Fe), and the like.

Examples of the solid solution material include alkali metal-manganese oxides represented by the general formula $Mx[Mn_{(1-y)}M^7{}_y]O_z$. Here, M is at least one metal selected from the group consisting of Li, Na and K, and $M^7$ includes at least one metal element other than M and Mn and one or two or more elements selected from the group consisting of Co, Ni, Fe, Ti, Mo, W, Cr, Zr, and Sn. Further, the values of x, y, and z in the formula are in the ranges of $1 < x < 2$, $0 \leq y \leq 1$, and $1.5 < z < 3$. Among them, a manganese-containing solid solution material such as $Li_{1.2}Mn_{0.5}Co_{0.14}Ni_{0.14}O_2$ in which $LiNiO_2$ or $LiCoO_2$ is dissolved as a solid solution in a base of $Li_2MnO_3$ is preferable from the viewpoint that an alkali metal ion secondary battery having a high energy density can be provided.

Further, it is preferable to include lithium phosphate in the positive electrode active material because continuous charging characteristics are improved. Although the use of lithium phosphate is not limited, it is preferable to use a mixture of the above-described positive electrode active material and lithium phosphate. The lower limit of the amount of lithium phosphate used is preferably not less than 0.1% by mass, more preferably not less than 0.3% by mass, and further preferably not less than 0.5% by mass, based on the total of the positive electrode active material and lithium phosphate. The upper limit is preferably not more than 10% by mass, more preferably not more than 8% by mass, and further preferably not more than 5% by mass, based on the total of the positive electrode active material and lithium phosphate.

Examples of the conductive polymer include p-doping type conductive polymers and n-doping type conductive polymers. Examples of the conductive polymer include polyacetylene-based polymers, polyphenylene-based polymers, heterocyclic polymers, ionic polymers, ladder and network polymers, and the like.

The positive electrode active material may have a substance with a different composition attached to its surface. Examples of the surface-attached substance include oxides such as aluminum oxide, silicon oxide, titanium oxide, zirconium oxide, magnesium oxide, calcium oxide, boron oxide, antimony oxide, and bismuth oxide, sulfates such as lithium sulfate, sodium sulfate, potassium sulfate, magnesium sulfate, calcium sulfate, and aluminum sulfate, carbonates such as lithium carbonate, calcium carbonate, and magnesium carbonate, carbon, and the like.

These surface-attached substances can be attached to the surface of the positive electrode active material by, for example, a method of dissolving or suspending the substance in a solvent, impregnating or adding it to the positive electrode active material, and then drying, or a method of dissolving or suspending a precursor of the surface-attached substance in a solvent, impregnating or adding it to the positive electrode active material, and then causing the surface-attached substance to react by heating or the like, or a method of attaching the substance to the surface of the positive electrode active material by sintering the substance at the same time as adding it to a precursor of the positive electrode active material. In addition, in the case of attaching carbon, a method of mechanically attaching carbonaceous matter in the form of activated carbon or the like later can also be used.

Based on the mass relative to the positive electrode active material, the lower limit of the amount of the surface-attached substance is preferably not less than 0.1 ppm, more preferably not less than 1 ppm, and further preferably not less than 10 ppm, and the upper limit is preferably not more than 20%, more preferably not more than 10%, and further preferably not more than 5%. The surface-attached substance can inhibit an oxidation reaction between the electrolytic solution at the surface of the positive electrode active material, which enables battery life to be improved. If the attached amount is too small, the effect may not be sufficiently exhibited, and if the attached amount is too large, the resistance may increase due to absorption/desorption of the lithium ions being inhibited.

Examples of the shape of the particles of the positive electrode active material include conventionally used shapes, such as mass-shaped, polyhedral, spherical, oval, plate-shaped, needle-shaped, and columnar-shaped. Further, primary particles may be aggregated to form secondary particles.

The tapped density of the positive electrode active material is preferably 0.5 $g/cm^3$ or more, more preferably 0.8 $g/cm^3$ or more, and further preferably 1.0 $g/cm^3$ or more. If the tapped density of the positive electrode active material is lower than this lower limit, the amount of dispersion medium required for forming the positive electrode active material layer may increase, the required amounts of the conductive material and the binder may increase, the filling ratio of the positive electrode active material to the positive electrode active material layer may be limited, and the battery capacity may be limited. By using a complex oxide powder with a high tapped density, a high density positive electrode active material layer can be formed. Generally, the higher the tapped density, the better. Although there is no upper limit, if the tapped density is too large, the diffusion of lithium ions in the positive electrode active material layer using the electrolytic solution as a medium becomes rate-determining, and the load characteristics tend to deteriorate. Therefore, the upper limit is preferably not more than 4.0 $g/cm^3$, more preferably not more than 3.7 $g/cm^3$, and further preferably not more than 3.5 $g/cm^3$.

In the present disclosure, the tapped density is determined as the powder filling density (tapped density) $g/cm^3$ when 5 to 10 g of the positive electrode active material powder is placed in a 10 ml glass graduated cylinder and tapped 200 times with a stroke of about 20 mm.

The median diameter d50 of the particles of the positive electrode active material (secondary particle size when primary particles aggregate to form secondary particles) is preferably 0.3 $\mu$m or more, more preferably 0.5 $\mu$m or more, further preferably 0.8 $\mu$m or more, and most preferably 1.0 $\mu$m or more, and is preferably 30 $\mu$m or less, more preferably 27 $\mu$m or less, further preferably 25 $\mu$m or less, and most preferably 22 $\mu$m or less. If the median diameter d50 is less than this lower limit, it may not be possible to obtain a high tapped density product, and if median diameter d50 exceeds the upper limit, it takes time for the lithium to diffuse within the particles, which may result in problems such as a decrease in battery performance and the occurrence of streaks when forming the positive electrode of the battery, that is, when preparing a slurry of the active material, conductive material, binder, and the like with a solvent and coating the slurry as a thin film. Here, by mixing two or more types of the above-described positive electrode active material having different median diameters d50, the filling property at the time of forming the positive electrode can be further improved.

In addition, in the present disclosure, the median diameter d50 is measured by a known laser diffraction/scattering particle size distribution measurement apparatus. When the LA-920 manufactured by HORIBA is used as a particle size distribution analyzer, a 0.1% by mass sodium hexametaphosphate aqueous solution is used as a dispersion medium for measurement, and the measurement is carried out by setting a measurement refractive index of 1.24 after performing ultrasonic dispersion for 5 minutes.

In a case in which primary particles aggregate to form secondary particles, the average primary particle size of the positive electrode active material is preferably 0.05 $\mu$m or more, more preferably 0.1 $\mu$m or more, and further preferably 0.2 $\mu$m or more. The upper limit is preferably not more than 5 $\mu$m, more preferably not more than 4 $\mu$m, further preferably not more than 3 $\mu$m, and most preferably not more than 2 $\mu$m. If the upper limit is exceeded, it is difficult to form spherical secondary particles, which adversely affects the powder filling property and greatly reduces the specific surface area, and as a result there may be an increased possibility of a decrease in battery performance such as output characteristics. Conversely, if the average primary particle size is lower than the above-described lower limit, problems such as poor reversibility of charge/discharge may occur due to underdevelopment of crystals.

In addition, in the present disclosure, the average primary particle size of the positive electrode active material is measured by observation using a scanning electron microscope (SEM). Specifically, the average primary particle size is determined by, in a photograph at a magnification of 10,000 times, determining the value of the maximum length of a section formed by the left and right boundary lines of the primary particles with respect to a straight line in the horizontal direction for 50 arbitrary primary particles, and taking the average value thereof.

The BET specific surface area of the positive electrode active material is preferably 0.1 m$^2$/g or more, more preferably 0.2 m$^2$/g or more, and further preferably 0.3 m$^2$/g or more. The upper limit is preferably not more than 50 m$^2$/g, more preferably not more than 40 m$^2$/g, and further preferably not more than 30 m$^2$/g. If the BET specific surface area is smaller than this range, battery performance tends to decrease. If the BET specific surface area is larger than this range, it is harder for the tapped density to increase, and problems in the coating property when forming the positive electrode active material layer can tend to occur.

In the present disclosure, the BET specific surface area is defined as the value obtained by, using a surface area meter (for example, a fully automatic surface area measurement apparatus manufactured by Okura Riken), pre-drying a sample at 150°C for 30 minutes under a nitrogen flow, and then performing the measurement by the nitrogen adsorption BET one-point method according to a gas flow method using a nitrogen-helium mixed gas precisely adjusted so that the value of the relative pressure of nitrogen to atmospheric pressure is 0.3.

When the secondary battery of the present disclosure is used as a large lithium ion secondary battery for a hybrid automobile or a distributed power source, a high output is required, and it is preferred that the particles of the positive electrode active material are mainly secondary particles.

The particles of the positive electrode active material preferably include 0.5 to 7.0% by volume of fine particles having an average secondary particle size of 40 $\mu$m or less and an average primary particle size of 1 $\mu$m or less. By containing fine particles with an average primary particle size of 1 $\mu$m or less, the contact area with the electrolytic solution increases, so the diffusion of lithium ions between the electrode mixture and the electrolytic solution can be made faster, and as a result the output performance of the battery can be improved.

As a method for producing the positive electrode active material, a general method for producing an inorganic compound is used. To produce a spherical or oval active material in particular, various methods are conceivable. For example, a transition metal raw material may be dissolved or pulverized and dispersed in a solvent such as water, the pH adjusted while stirring to prepare a spherical precursor, which is collected and optionally dried, the Li source such as LiOH, $Li_2CO_3$, or LiNOs is added, and then sintering is carried out at a high temperature to obtain the active material.

To produce the positive electrode, the above-described positive electrode active material may be used alone, or two or more types having different compositions may be used in any combination or ratio. Preferred combinations in this case include a combination of $LiCoO_2$ and a ternary system such as $LiNi_{0.33}Co_{0.33}Mn_{0.33}O_2$, a combination of $LiCoO_2$ and $LiMn_2O_4$ or a material in which a part of the Mn are replaced with another transition metal or the like, or a combination of $LiFePO_4$ and $LiCoO_2$ or a material in which a part of the Co are replaced with another transition metal or the like.

From the viewpoint of high battery capacity, the content of the positive electrode active material in the positive electrode mixture is preferably 50 to 99.5% by mass, and more preferably 80 to 99% by mass.

Further, the content of the positive electrode active material is preferably 80% by mass or more, more preferably 82% by mass or more, and particularly preferably 84% by mass or more. The upper limit is preferably not more than 99% by mass, and more preferably not more than 98% by mass. If the content of the positive electrode active material in the positive electrode mixture is low, the electric capacity may be insufficient. Conversely, if the content is too high, the strength of the positive electrode may be insufficient.

Examples of the negative electrode active material include, but are not limited to, any selected from lithium metal, carbonaceous matter materials such as artificial graphite, graphite carbon fiber, resin sintered carbon, pyrolytic vapor grown carbon, coke, mesocarbon microbeads (MCMB), furfuryl alcohol resin sintered carbon, polyacene, pitch-based carbon fiber, vapor grown carbon fiber, natural graphite, and non-graphitizing carbon, silicon-containing compounds such as silicon and silicon alloys, $Li_4Ti_5O_{12}$, and the like, or a mixture of two or more types of these. Among them, those at least partially including a carbonaceous matter material and silicon-containing compounds can be particularly preferably used.

It is preferred that the negative electrode active material used in the present disclosure includes silicon as the constituent element. When silicon is included as the constituent element, a battery having a high capacity can be produced.

The particles including silicon are preferably silicon particles, a particle having a structure in which silicon fine particles are dispersed in a silicon compound, a silicon oxide particle represented by the general formula SiOx ($0.5 \leq x \leq 1.6$), or mixtures thereof. Use of these particles can provide a negative electrode mixture for a lithium ion secondary battery having a higher initial charge/discharge efficiency, a high capacity, and excellent cycle characteristics.

The silicon oxide in the present disclosure is a collective term for amorphous oxides of silicon, and silicon oxide before disproportionation is represented by the general formula SiOx ($0.5 \leq x \leq 1.6$). x is preferably $0.8 \leq x \leq 1.6$, and more preferably $0.8 \leq x < 1.3$. The silicon oxide can be obtained by, for example, cooling and depositing a silicon monoxide gas generated when a mixture of silicon dioxide and metal silicon is heated.

The particle having a structure in which silicon fine particles are dispersed in a silicon compound can be obtained by, for example, a method of firing a mixture of silicon fine particles and a silicon compound, or carrying out disproportionation reaction in which silicon oxide particles before disproportionation represented by the general formula SiOx are heated in an inert non-oxidizing atmosphere such as argon at a temperature of 400°C or more, and preferably at 800 to 1,100°C. A material obtained by the latter method is preferred because silicon fine particles are homogeneously dispersed. The disproportionation reaction as described above enables the size of silicon nanoparticles to be 1 to 100 nm. It is desirable that the silicon oxide in a particle having a structure in which silicon nanoparticles are dispersed in silicon oxide is silicon dioxide. Dispersed silicon nanoparticles (crystals) in amorphous silicon oxide can be observed using a transmission electron microscope.

Physical properties of the particle including silicon can be appropriately selected according to an intended composite particle. For example, the average particle size is preferably 0.1 to 50 $\mu$m, and the lower limit is more preferably 0.2 $\mu$m or more, and further preferably 0.5 $\mu$m or more. The upper limit is more preferably 30 $\mu$m or less, and further preferably 20 $\mu$m or less. The average particle size used in the present invention is expressed in the weight average particle size when particle size distribution is measured by laser diffraction.

The BET specific surface area of the particle including silicon is preferably 0.5 to 100 m$^2$/g, and more preferably 1 to 20 m$^2$/g. With a BET specific surface area of 0.5 m$^2$/g or more, there is no risk of decrease in battery characteristics caused by decreased adhesiveness upon application to an electrode. With a BET specific surface area of 100 m$^2$/g or less, the proportion of silicon dioxide on the particle surface is higher, resulting in no risk of decrease in a battery capacity upon use as the negative electrode material for a lithium ion secondary battery.

Coating the above particle including silicon with carbon imparts the electric conductivity and improves battery characteristics. Examples of the method for imparting the electric conductivity include a method of mixing with electric conductive particles such as graphite, a method of coating the surface of the above particle including silicon with a carbon coat, and a method of combining both of the above methods. The method of coating with a carbon coat is preferred, and the method of coating is more preferably chemical vapor deposition (CVD).

To increase the capacity of the obtained electrode mixture, the content of the negative electrode active material in the electrode mixture is preferably 40% by mass or more, more preferably 50% by mass or more, and particularly preferably 60% by mass or more. The upper limit is preferably not more than 99% by mass, and more preferably not more than 98% by mass.

(Conductive aid)

As the conductive aid, any known conductive material can be used. Specific examples include metal materials such as copper and nickel, and carbon materials, for example, graphite such as natural graphite and artificial graphite, carbon black such as acetylene black, ketjen black, channel black, furnace black, lamp black, and thermal black, and amorphous carbons such as needle coke, carbon nanotubes, fullerenes, and VGCF. One type of these may be used alone, or two or more types may be used in any combination or ratio.

The conductive aid is used such that it has a content in the electrode mixture of usually 0.01% by mass or more, preferably 0.1% by mass or more, and more preferably 1% by mass or more, and usually 50% by mass or less, preferably 30% by mass or less, and more preferably 15% by mass or less. If the content is lower than this range, the electric conductivity may be insufficient. Conversely, if the content is higher than this range, the battery capacity may decrease.

(Other components)

The electrode mixture may further include a thermoplastic resin. Examples of the thermoplastic resin include vinylidene fluoride, polypropylene, polyethylene, polystyrene, polyethylene terephthalate, and polyethylene oxide. One type of these may be used alone, or two or more types may be used together in any combination and ratio.

The proportion of the thermoplastic resin to the electrode active material is in the range of usually 0.01% by mass or more, preferably 0.05% by mass or more, and more preferably 0.10% by mass or more, and is in the range of usually 3.0% by mass or less, preferably 2.5% by mass or less, and more preferably 2.0% by mass or less. By adding a thermoplastic resin, the mechanical strength of the electrode can be improved. If this range is exceeded, the proportion of the electrode active material in the electrode mixture will decrease, which may cause problems such as a decrease in battery capacity and an increase in resistance between active materials.

In the electrode mixture of the present disclosure, as a proportion of the binder in the electrode mixture, the binder content is usually 0.1% by mass or more, preferably 0.5% by mass or more, and more preferably 1.0% by mass or more, and is usually 50% by mass or less, preferably 40% by mass or less, more preferably 30% by mass or less, and most preferably 10% by mass or less. If the binder proportion is too low, the active material cannot be retained sufficiently in the electrode mixture, and the mechanical strength of the electrode mixture sheet is insufficient, which may cause a battery performance such as cycle characteristics to worsen. On the other hand, if the binder proportion is too high, this may lead to a decrease in battery capacity and electric conductivity.

The electrode mixture of the present disclosure can be used as the electrode mixture for a secondary battery. The electrode mixture of the present disclosure is suitable for a lithium ion secondary battery.

The electrode mixture of the present disclosure is typically used in sheet form when used in a secondary battery.

An example of a specific method for producing the electrode mixture sheet including the electrode mixture is as follows.

The electrode mixture sheet of the present disclosure can be obtained by a method for producing an electrode mixture sheet for a secondary battery having:

(1) applying a shear force while mixing a raw material composition including an electrode active material, a binder, and optionally a conductive aid;
(2) forming the electrode mixture obtained in step (1) into a bulk shape; and
(3) rolling the bulk-shape electrode mixture obtained in step (2) into a sheet shape.

At the stage of applying a shear force while mixing the raw material composition in step (1), the obtained electrode mixture is present in an undetermined form in which the electrode active material, binder, and the like are simply mixed. Examples of specific mixing methods include methods of mixing using a W-type mixer, a V-type mixer, a drum-type mixer, a ribbon mixer, a conical screw-type mixer, a single-screw kneader, a twinscrew kneader, a mix-muller, an agitating mixer, a planetary mixer, and the like.

In step (1), the mixing conditions may be appropriately set in terms of rotation speed and mixing time. For example, the number of revolutions is preferably 1,000 rpm or less. The number of revolutions is in the range of preferably 10 rpm or more, more preferably 15 rpm or more, and further preferably 20 rpm or more, and is in the range of preferably 900 rpm or less, more preferably 800 rpm or less, and further preferably 700 rpm or less. If the number of rotations is less than the above range, the mixing takes time, which affects productivity. On the other hand, if the number of rotations exceeds the above range, excessive fibrillation may occur, resulting in an electrode mixture sheet with inferior strength and flexibility.

In step (2), forming into a bulk shape means forming the electrode mixture into one mass.

Specific methods of forming into a bulk shape include extrusion, press forming, and the like.

Further, the term "bulk shape" does not specify a specific shape, and the shape may be in any form as a single mass, including a rod shape, a sheet shape, a spherical shape, a cubic shape, and the like. As for the size of the mass, it is preferable that the diameter or the minimum size of the cross section is 10,000 $\mu$m or more, and more preferably 20,000 $\mu$m or more.

Examples of the specific rolling method in step (3) include a method of rolling using a roll press machine, a flat plate press machine, a calender roll machine, or the like.

Moreover, it is also preferable to have, after the step (3), a step (4) of applying a larger load to the obtained roll sheet and rolling it into a thinner sheet. It is also preferable to repeat step (4). In this way, the flexibility is improved by rolling the sheet little by little in stages instead of thinning the roll sheet all at once.

The number of times that step (4) is carried out is preferably 2 or more and 10 or less, and more preferably 3 or more and 9 or less.

A specific rolling method is to, for example, rotate two or a plurality of rolls and pass the roll sheet between the rolls to form a thinner sheet.

Further, from the viewpoint of adjusting the fibril diameter, it is preferable to have, after step (3) or step (4), a step (5) of coarsely crushing the roll sheet, then again forming into a bulk shape, and rolling into a sheet. It is also preferable to repeat step (5). The number of times that step (5) is carried out is preferably 1 time or more and 12 times or less, and more preferably 2 times or more and 11 times or less.

In step (5), examples of the specific method of coarsely crushing and forming the roll sheet into a bulk shape include a method of folding the roll sheet, a method of forming into a rod or thin sheet shape, a method of chipping, and the like. In the present disclosure, "coarsely crush" means to change the form of the roll sheet obtained in step (3) or step (4) into another form for rolling into a sheet shape in the next step, and may include a case of simply folding a roll sheet.

Step (4) may be performed after step (5), or may be performed repeatedly.

Further, uniaxial stretching or biaxial stretching may be carried out in step (2) as well as steps (3), (4), and (5).

In addition, the fibril diameter (median value) can also be adjusted by the degree of coarse crushing in step (5) .

In the above steps (3), (4), and (5), the roll rate is preferably in the range of 10% or more, and more preferably 20% or more, and is preferably in the range of 80% or less, more preferably 65% or less, and further preferably 50% or less. If the roll rate is lower than the above range, the rolling takes time as the number of rolls increases, which affects productivity. On the other hand, if the roll rate exceeds the above range, fibrillation may proceed excessively, which may result in an electrode mixture sheet having inferior strength and flexibility.

Here, the roll rate refers to the rate of decrease in the thickness of the sample after rolling with respect to the thickness before rolling. The sample before rolling may be a raw material composition in a bulk shape or a raw material composition in a sheet shape. The thickness of the sample refers to the thickness in the direction in which a load is applied during rolling.

As described above, PTFE powder is fibrillated by applying a shearing force. In order to have a fibrous structure with a fibril diameter (median value) of 70 nm or less, if the shear stress is excessive, excessive fibrillation may proceed, which impairs flexibility. Further, if shear stress is weak, strength may not be sufficient. For this reason, during mixing and rolling, in the above range, the resin is rolled and stretched into a sheet by applying an appropriate shear stress to the PTFE to promote fibrillation, whereby a fibrous structure with a fibril diameter (median value) of 70 nm or less can be obtained.

The electrode mixture sheet of the present disclosure can be used as the electrode mixture sheet for a secondary battery. The electrode mixture sheet can be either for a positive electrode or for a negative electrode. The electrode mixture sheet of the present disclosure is particularly suitable for a lithium ion secondary battery.

(Positive electrode)

In the present disclosure, it is preferable that the positive electrode is constructed from a current collector and the above-described electrode mixture sheet including a positive electrode active material.

Examples of the material of the current collector for the positive electrode include metals such as aluminum, titanium, tantalum, stainless steel, and nickel, metal materials such as alloys thereof, and carbon materials such as carbon cloth and carbon paper. Among them, a metal material, particularly of aluminum or an alloy thereof, is preferred.

In the case of a metal material, examples of the shape of the current collector include a metal foil, a metal cylinder, a metal coil, a metal plate, expanded metal, punch metal, metal foam, and the like. For a carbon material, examples include a carbon plate, a carbon thin film, a carbon cylinder, and the like. Among these, a metal foil is preferred. The metal foil may be appropriately formed into a mesh shape.

The thickness of the metal foil is arbitrary, but is usually 1 $\mu$m or more, preferably 3 $\mu$m or more, and more preferably 5 $\mu$m or more, and usually 1 mm or less, preferably 100 $\mu$m or less, and more preferably 50 $\mu$m or less. If the metal foil is thinner than this range, it may lack the strength required as a current collector. Conversely, if the metal foil is thicker than this range, handleability may be impaired.

Further, from the viewpoint of reducing the electrical contact resistance between the current collector and the positive electrode mixture sheet, it is preferable to coat the surface of the current collector with a conductive aid. Examples of the conductive aid include carbon and noble metals such as gold, platinum, and silver.

The thickness ratio of the current collector to the positive electrode mixture is not limited, but a value obtained by (one side of thickness of positive electrode mixture sheet immediately before injecting an electrolytic solution)/(thickness of current collector) is in the range of preferably 20 or less, more preferably 15 or less, and most preferably 10 or less, and preferably 0.5 or more, more preferably 0.8 or less, and most preferably 1 or more. If the thickness ratio exceeds this range, a current collector may generate heat by Joule heat during charge/discharge at high current densities. If the thickness ratio is less than this range, a volume ratio of a current collector to the positive electrode active material increases, and a battery capacity may decrease.

The positive electrode may be produced according to a conventional method. For example, a method of laminating the electrode mixture sheet and the current collector with an adhesive between them and drying the laminate can be used.

The density of the positive electrode mixture sheet is preferably 3.00 g/cm$^3$ or more, more preferably 3.10 g/cm$^3$ or more, and further preferably 3.20 g/cm$^3$ or more, and preferably 3.80 g/cm$^3$ or less, more preferably 3.75 g/cm$^3$ or less, and further preferably 3.70 g/cm$^3$ or less. If the density exceeds this range, the penetration of the electrolytic solution near the interface between the current collector and the active material decreases, resulting in poor charge/discharge characteristics, especially at high current densities, and a high power output may not be obtained. On the other hand, if the density is lower than this range, the electric conductivity between the active materials decreases, the battery resistance increases, and a high output may not be obtained.

It is preferred that the area of the positive electrode mixture sheet, from the viewpoint of enhancing the stability at a high output and a high temperature, is larger than the outer surface area of a battery exterior case. Specifically, the sum of electrode mixture areas at the positive electrode to the surface area of a secondary battery exterior is preferably 15 times or more in terms of area ratio, and further, more preferably 40 times or more. The outer surface area of a battery exterior case refers to, in the case of a rectangular shape having closed bottom, the total area determined by calculation from the dimension of length, width, and thickness of the case portion in which power generation elements, excluding the projecting part of terminals, are packed. In the case of a cylindrical shape having closed bottom, the outer surface area of a battery exterior case refers to the geometric surface area of the approximate cylinder, which is the case portion in which power generation elements, excluding the projecting part of terminals, are packed. The sum of electrode mixture areas at the positive electrode refers to the geometric surface area of positive electrode mixture layer opposite to the mixture layer including the negative electrode active material, and in the structure in which a positive electrode mixture layer is formed on both sides of a current collector, the sum of electrode mixture areas at the positive electrode refers to the sum of areas obtained by separately calculating each side.

The thickness of the positive electrode is not limited, but from the viewpoint of a high capacity and a high output, the thickness of the mixture sheet after subtracting the thickness of the current collector is, as the lower limit for one side of the current collector, preferably 10 $\mu$m or more, and more preferably 20 $\mu$m or more, and preferably 500 $\mu$m or less, and more preferably 450 $\mu$m or less.

The positive electrode may have a substance with a different composition attached to its surface. Examples of the surface-attached substance include oxides such as aluminum oxide, silicon oxide, titanium oxide, zirconium oxide, magnesium oxide, calcium oxide, boron oxide, antimony oxide, and bismuth oxide, sulfates such as lithium sulfate, sodium sulfate, potassium sulfate, magnesium sulfate, calcium sulfate, and aluminum sulfate, carbonates such as lithium carbonate, calcium carbonate, and magnesium carbonate, carbon, and the like.

(Negative electrode)

In the present disclosure, it is preferable that the negative electrode is constructed from a current collector and the above-described electrode mixture sheet including a negative electrode active material.

Examples of the material of the current collector for the negative electrode include metals such as copper, nickel, titanium, tantalum, and stainless steel, metal materials such as alloys thereof, and carbon materials such as carbon cloth and carbon paper. Among them, a metal material, particularly of copper, nickel, or an alloy thereof, is preferred.

In the case of a metal material, examples of the shape of the current collector include a metal foil, a metal cylinder, a metal coil, a metal plate, expanded metal, punch metal, metal foam, and the like. For a carbon material, examples include a carbon plate, a carbon thin film, a carbon cylinder, and the like. Among these, a metal foil is preferred. The metal foil may be appropriately formed into a mesh shape.

The thickness of the metal foil is arbitrary, but is usually 1 $\mu$m or more, preferably 3 $\mu$m or more, and more preferably 5 $\mu$m or more, and usually 1 mm or less, preferably 100 $\mu$m or less, and more preferably 50 $\mu$m or less. If the metal foil is thinner than this range, it may lack the strength required as a current collector. Conversely, if the metal foil is thicker than this range, handleability may be impaired.

The negative electrode may be produced according to a conventional method. For example, a method of laminating the electrode mixture sheet and the current collector with an adhesive between them and vacuum drying the laminate can be used.

The density of the negative electrode mixture sheet is preferably 1.3 g/cm$^3$ or more, more preferably 1.4 g/cm$^3$ or more, and further preferably 1.5 g/cm$^3$ or more, and preferably 2.0 g/cm$^3$ or less, more preferably 1.9 g/cm$^3$ or less, and further preferably 1.8 g/cm$^3$ or less. If the density exceeds this range, the penetration of the electrolytic solution near the interface between the current collector and the active material decreases, resulting in poor charge/discharge characteristics, especially at high current densities, and a high power output may not be obtained. On the other hand, if the density is lower than this range, the electric conductivity between the active materials decreases, the battery resistance increases, and a high output may not be obtained.

The thickness of the negative electrode is not limited, but from the viewpoint of a high capacity and a high output, the thickness of the mixture sheet after subtracting the thickness of the current collector is, as the lower limit for one side of the current collector, preferably 10 $\mu$m or more, and more preferably 20 $\mu$m or more, and preferably 500 $\mu$m or less, and more preferably 450 $\mu$m or less.

(Secondary battery)

The present disclosure also relates to a secondary battery using the above-described electrode mixture sheet. The secondary battery of the present disclosure can use an electrolytic solution and a separator used for known secondary batteries. These are described in detail below.

(Electrolytic solution)

Nonaqueous electrolytic solution usable is a solution in which a known electrolyte salt is dissolved in a known organic solvent for dissolving an electrolyte salt.

The organic solvent for dissolving an electrolyte salt is not limited, and includes one or more kinds of known hydrocarbon solvents such as propylene carbonate, ethylene carbonate, butylene carbonate, γ-butyrolactone, 1,2-dimethoxyethane, 1,2-diethoxyethane, dimethyl carbonate, diethyl carbonate, and ethyl methyl carbonate; and fluorinated solvents such as fluoroethylene carbonate, fluoro ether, and fluorinated carbonate.

Examples of electrolyte salt include $LiClO_4$, $LiAsF_6$, $LiBF_4$, $LiPF_6$, $LiN(SO_2CF_3)_2$, and $LiN(SO_2C_2F_5)_2$, with $LiPF_6$, $LiBF_4$, $LiN(SO_2CF_3)_2$, $LiN(SO_2C_2F_5)_2$ or combinations thereof being particularly preferred due to good cycle characteristics.

The concentration of the electrolyte salt needs to be 0.8 mol/L or more, and further 1.0 mol/L or more. The upper limit depends on the organic solvent for dissolving an electrolyte salt, but is usually 1.5 mol/L.

(Separator)

It is preferred that the secondary battery of the present disclosure further includes a separator.

The material and shape of the above separator are not limited as long as it is stable with an electrolytic solution and good in liquid retaining property, and a known material and shape can be used. Among them, a resin, a glass fiber, an inorganic matter, and the like formed with a material stable with the electrolytic solution used in the present disclosure or the electrolytic solution used in the alkali metal secondary battery of the present disclosure are used, and it is preferred to use such a material in the form of a porous sheet or a nonwoven fabric having excellent liquid retaining property.

The usable material for resin or glass fiber separators is, for example, polyolefins such as polyethylene and polypropylene, aromatic polyamide, polytetrafluoroethylene, polyethersulfone, or a glass filter. These materials may be used singly, or 2 or more may be used in any combination and ratio such as a polypropylene/polyethylene 2-layer film, a polypropylene/polyethylene/polypropylene 3-layer film, and the like.

Among them, it is preferred that the above-described separator is a porous sheet, a nonwoven fabric, or the like having polyolefins such as polyethylene, and polypropylene as a raw material, from the viewpoint of good penetration of and shutdown effect on the electrolytic solution.

The thickness of the separator is selectable, and is usually 1 μm or more, preferably 5 μm or more, and further preferably 8 μm or more, and usually 50 μm or less, preferably 40 μm or less, and further preferably 30 μm or less. If the separator is thinner than the above range, insulating property or mechanical strength may decrease. If the separator is thicker than the above range, not only the battery performance such as rate characteristics may decrease, but also the energy density of an electrolytic solution battery as a whole may decrease.

Further, when a porous material such as a porous sheet or a nonwoven fabric is used as the separator, the porosity of the separator is selectable, and usually 20% or more, preferably 35% or more, and further preferably 45% or more, and usually 90% or less, preferably 85% or less, and further preferably 75% or less. If the porosity is lower than the above range, membrane resistance tends to increase thereby worsening rate characteristics. If the porosity is higher than the above range, the mechanical strength of the separator tends to decrease and thereby decreasing the insulating property.

The average pore size of the separator is also selectable, and is usually 0.5 μm or less, and preferably 0.2 μm or less, and usually 0.05 μm or more. If the average pore size exceeds the above range, a short circuit easily occurs. If the average pore size is less than the above range, membrane resistance tends to increase thereby worsening rate characteristics.

The material usable for the inorganic matter is, for example, oxides such as alumina and silicon dioxide, nitrides such as aluminum nitride and silicon nitride, or sulfates such as barium sulfate and calcium sulfate, in particulate shape or fibrous shape.

Usable is a form in a thin-film shape such as a nonwoven fabric, a woven fabric, or a microporous film. A thin-film shape having a pore size of 0.01 to 1 μm and a thickness of 5 to 50 μm is suitably used. In addition to the above-described independent thin-film shape, a separator obtained by forming a composite porous layer containing particles of the above-described inorganic matter using a binder made of a resin on the outer layer of the positive electrode and/or negative electrode can be used.

An example includes the formation of porous layers of alumina particles having a 90% particle size of less than 1 $\mu$m on both sides of a positive electrode using a fluororesin as the binder.

(Battery design)

The electrode mixture unit may be either a laminated structure including the above-described positive electrode and negative electrode with the above-described separator therebetween, or a wound structure including the above-described positive electrode and negative electrode with the above-described separator therebetween. The volume proportion of the electrode mixture unit in the battery internal volume (hereinafter, referred to as the electrode mixture unit occupancy) is usually 40% or more, and preferably 50% or more, and usually 90% or less, and preferably 80% or less.

If the electrode mixture unit occupancy is less than the above range, a battery capacity may decrease. If the electrode mixture unit occupancy exceeds the above range, a void space is small, an internal pressure increases when parts expand as a battery reaches a high temperature or a vapor pressure of electrolyte solution component increases thereby causing various characteristics as a battery such as charge/discharge repeating performance and high temperature storage to decrease, and further a gas-releasing valve for releasing an internal pressure to outside may operate.

The current collection structure is not limited, but is preferably a structure which reduces resistance at the wiring part and connecting part for more effectively achieving the enhancement of charge/discharge characteristics at high current densities by an electrolytic solution. When the internal resistance is thus reduced, the effect with the use of the electrolytic solution is particularly well exhibited.

When the electrode mixture unit has the above-described laminated structure, the structure obtained by bundling the metal core part of each electrode mixture layer and welding to terminal is suitably used. When one sheet of the electrode mixture area is larger, an internal resistance is higher where the reduction of resistance by providing a plurality of terminals in the electrode mixture is suitably used. When the electrode mixture unit has the above-described wound structure, an internal resistance can be reduced by providing the positive electrode and negative electrode respectively with a plurality of reed structures and bundling with terminals.

The material for exterior case is not limited as long as it is a material stable with the electrolytic solution to be used. Specifically, metals such as a nickel-plated steel plate, stainless steel, aluminum or an aluminum alloy, and a magnesium alloy, or a laminate film of a resin and an aluminum foil are used. Metals such as aluminum or an aluminum alloy, and a laminate film are suitably used from the viewpoint of weight saving.

Exterior cases using metals include a hermetically sealed structure obtained by welding metals by laser welding, resistance welding, or ultrasonic welding, or a "caulking structure" obtained by using the above-described metals with a resin gasket therebetween. The exterior case using the above-described a laminate film includes a hermetically sealed structure obtained by heat sealing the resin layers. For enhancing the sealability, a different resin from the resin used for the laminate film may be interposed between the above-described resin layers. Particularly, in the case of obtaining a sealed structure by heat sealing resin layers with current collecting terminals therebetween, the metal and resin are bonded where a resin having a polar group or a modified resin into which a polar group is introduced is suitably used as a resin to be interposed.

The shape of the secondary battery of the present disclosure is selectable, and examples include a cylindrical shape, a rectangular shape, a laminate, a coin shape, a large shape, and the like. The shape and structure of the positive electrode, negative electrode, and separator can be optionally altered and used to suit the shape of various batteries.

Examples

Hereinafter, the present disclosure will be specifically described based on examples.

In the following examples, "parts" and "%" represent "parts by mass" and "% by mass", respectively, unless otherwise specified.

[Production Example 1]

Powdered PTFE-A was obtained by referring to Production Example 2 of International Publication No. WO 2015-080291.

[Production Example 2]

Powdered PTFE-B was obtained by referring to Production Example 3 of International Publication No. WO 2015-080291.

[Production Example 3]

Powdered PTFE-C was obtained by referring to Production Example 1 of International Publication No. WO 2012/086710.

[Production Example 4]

Powdered PTFE-D was obtained by referring to Reference Example 1 of International Publication No. WO 2012-063622.

The physical properties of the produced PTFEs are shown in table 1.

[Table 1]

| PTFE Produced | Form | Standard specific gravity | Moisture content after vacuum drying (ppm) |
|---|---|---|---|
| PTFE-A | Powdered | 2.16 | <250 |
| PTFE-B | Powdered | 2.15 | <250 |
| PTFE-C | Powdered | 2.16 | <250 |
| PTFE-D | Powdered | 2.19 | <250 |

(Example 1)

<Production of positive electrode mixture sheet>

$Li(Ni_{0.6}Mn_{0.2}Co_{0.2})O_2$ (NMC622) as a positive electrode active material and carbon black as a conductive aid were weighed and stirred in a mortar at 200 rpm for 1 hour to obtain a mixture.

It is noted that the powdered PTFE-C had been dried in a vacuum dryer at 50°C for 1 hour. The powdered PTFE had been sieved in advance using a stainless steel sieve with an opening of 500 $\mu$m, and the material remaining on the sieve was used.

Then, powdered PTFE was added as a binder to a container holding the mixture and stirred at 40 rpm for 2 hours to obtain a mixture. The mass ratio was adjusted to be positive electrode active material:binder:conductive aid=95:2:3.

The resulting mixture was formed into a bulk shape and rolled into a sheet.

Then, a step of coarsely crushing the roll sheet obtained in the previous step by folding it in two, forming again into a bulk shape, and then rolling into a sheet shape using a metal roll on a flat plate to form fibrils was repeated four times. After that, the sheet was further rolled to obtain a positive electrode mixture sheet with a thickness of about 500 $\mu$m. Further, the positive electrode mixture sheet was cut to 5 cm x 5 cm, put into a roll press, and rolled. The thickness was adjusted by repeatedly applying a load of 2 kN to further form fibrils. The gap was adjusted so that the thickness of the final positive electrode mixture layer was 101 $\mu$m. The first roll rate was the largest at 27%.

<Production of positive electrode>

The produced positive electrode mixture sheet was adhered to a 20 $\mu$m aluminum foil. The adhesive used was a slurry in which polyvinylidene fluoride (PVDF) was dissolved in N-methylpyrrolidone (NMP) and carbon nanotube (CNT) was dispersed. The adhesive mentioned above was applied to the aluminum foil, the produced sheet-shaped positive electrode mixture was put thereon so that air bubbles do not go therebetween, and vacuum dried at 100°C for 30 minutes to produce a positive electrode sheet integrated with a current collector.

<Production of negative electrode>

An artificial graphite powder as a negative electrode active material, an aqueous dispersion of carboxymethylcellulose sodium (carboxymethylcellulose sodium concentration of 1.5% by mass) as a thickener, an aqueous dispersion of styrene-butadiene rubber (SBR) (styrene-butadiene rubber concentration of 50% by mass) as a binder, and water as a solvent were added and mixed in the water solvent at 97.6:1.2:1.2 (% by mass ratio) in terms of solid contents using a mixer to prepare a negative electrode mixture slurry. The slurry was homogeneously applied to a 20 $\mu$m copper foil and dried (110°C, 30 minutes), and then compression-formed by applying a load of 10 kN using a press to produce a negative electrode sheet integrated with a current collector. The thickness of the negative electrode mixture layer was

99 μm.

<Production of electrolytic solution>

A mixed solvent of ethylene carbonate (EC) and ethyl methyl carbonate (EMC) (EC:EMC=30:70 (volume ratio)) as an organic solvent was weighed and put in a sample bottle, and 1% by mass each of fluoroethylene carbonate (FEC) and vinylene carbonate (VC) were dissolved therein to prepare an electrolytic solution. The concentration of LiPF6 salt in the electrolytic solution was adjusted to 1.0 mol/L and mixed at 23°C to obtain an electrolytic solution.

<Production of battery>

The negative electrode sheet and the positive electrode sheet produced as described above, and a polyethylene separator were laminated in the order of the negative electrode, the separator, and the positive electrode to produce a battery element.

The battery element was inserted into a bag composed of a laminate film in which both sides of aluminum (thickness of 40 μm) were coated with resin layers while projecting terminals of the positive electrode and the negative electrode, and then the electrolytic solution was poured in the bags respectively, and the bags were vacuum sealed to produce a sheet-shaped lithium ion secondary battery.

(Examples 2 to 4)

Lithium ion secondary batteries were produced in the same manner as in Example 1 except that the PTFEs shown in Table 2 were used.

(Comparative Example 1)

<Production of positive electrode mixture sheet>

NMC622 as a positive electrode active material and carbon black as a conductive aid were weighed and stirred in a mortar at 200 rpm for 1 hour to obtain a mixture.

Then, powdered PTFE shown in Table 2 were added as a binder to a container holding the mixture, stirred at 40 rpm for 2 hours, and then kneaded in a mixer at 1,400 rpm for 5 minutes to obtain a mixture. The mass ratio of solid contents was adjusted to be positive electrode active material:binder:conductive aid=95:2:3.

The resulting mixture was formed into a bulk shape and rolled into a sheet.

Then, a step of coarsely crushing the roll sheet obtained in the previous step by folding it in two, forming again into a bulk shape, and then rolling into a sheet shape using a metal roll on a flat plate to form fibrils was repeated four times. After that, the sheet was further rolled to obtain a positive electrode mixture sheet with a thickness of 500 μm. Further, the positive electrode mixture sheet was cut to 5 cm x 5 cm, put into a roll press, and rolled. The thickness was adjusted by repeatedly applying a load of 10 kN to further form fibrils. The gap was adjusted so that the thickness of the final positive electrode mixture layer was 101 μm. The first roll rate was the largest at 52%.

<Production of battery>

Lithium ion secondary batteries were produced in the same manner as in Example 1 except that the positive electrode mixture sheet produced as described above was used.

(Comparative Example 2)

Lithium ion secondary batteries were produced in the same manner as in Comparative Example 1 except that the PTFE shown in Table 2 were used.

(Example 5)

<Production of negative electrode mixture sheet>

25.65 g of an artificial graphite powder as a negative electrode active material and 2.85 g of SiO were weighed and stirred in a mortar at 200 rpm for 1 hour to obtain a mixture. The powdered PTFE used had been dried in a vacuum dryer at 50°C for 1 hour. It is noted that the powdered PTFE-C had been sieved in advance using a stainless steel sieve with an opening of 500 $\mu$m, and the material remaining on the sieve was used.

Then, 2.0 g of the powdered PTFE was added as a binder to a container holding the mixture and stirred at 40 rpm for 2 hours to obtain a mixture. The resulting mixture was formed into a bulk shape and rolled into a sheet.

Then, a step of coarsely crushing the roll sheet obtained in the previous step by folding it in two, forming again into a bulk shape, and then rolling into a sheet shape using a metal roll on a flat plate to form fibrils was repeated four times. After that, the sheet was further rolled to obtain a negative electrode mixture sheet with a thickness of 500 $\mu$m. Further, the negative electrode mixture sheet was cut to 5 cm x 5 cm, put into a roll press, and rolled. The thickness was adjusted by repeatedly applying a load of 2 kN to further form fibrils. The gap was adjusted so that the thickness of the final negative electrode mixture layer was 101 $\mu$m. The first roll rate was the largest at 38%.

<Production of negative electrode>

The produced negative electrode mixture sheet was adhered to a 20 $\mu$m copper foil. The adhesive used was a slurry in which PVDF was dissolved in NMP and CNT was dispersed. The adhesive mentioned above was applied to the copper foil, the produced negative electrode mixture sheet was put thereon so that air bubbles do not go therebetween, and vacuum dried at 100°C for 30 minutes to produce a negative electrode sheet integrated with a current collector.

<Production of positive electrode>

95% by mass of Li(Ni$_{1/3}$Mn$_{1/3}$Co$_{1/3}$) O$_2$ (NMC111) as a positive electrode active material, 3% by mass of acetylene black as a conductive aid, and 2% by mass of PVdF as a binder were mixed in an NMP solvent to obtain a slurry. The obtained slurry was homogeneously applied to a 20 $\mu$m aluminum foil, dried (110°C, 30 minutes), and then compression-formed by applying a load of 10 kN using a press to produce a positive electrode sheet integrated with a current collector. The thickness of the electrode mixture layer was about 100 $\mu$m.

<Production of battery>

Lithium ion secondary batteries were produced in the same manner as in Example 1 except that the negative electrode and the positive electrode produced as described above were used.

(Examples 6 to 8)

Lithium ion secondary batteries were produced in the same manner as in Example 5 except that the PTFEs shown in Table 3 were used.

(Comparative Example 3)

<Production of negative electrode mixture sheet>

25.65 g of an artificial graphite powder as a negative electrode active material and 2.85 g of SiO were weighed and stirred in a mortar at 200 rpm for 1 hour to obtain a mixture.

Then, 2.0 g of the powdered PTFE shown in Table 3 were added as a binder to a container holding the mixture and kneaded at 1,400 rpm for the total of 5 minutes to obtain a mixture. The resulting mixture was formed into a bulk shape and rolled into a sheet.

Then, a step of coarsely crushing the roll sheet obtained in the previous step by folding it in two, forming again into a bulk shape, and then rolling into a sheet shape using a metal roll on a flat plate to form fibrils was repeated four times. After that, the sheet was further rolled to obtain a negative electrode mixture layer with a thickness of 500 $\mu$m. Further, the negative electrode mixture sheet was cut to 5 cm x 5 cm, put into a roll press, and rolled. The thickness was adjusted by repeatedly applying a load of 10 kN. The gap was adjusted so that the thickness of the final negative electrode mixture layer was 101 $\mu$m. The first roll rate was the largest at 78%.

<Production of battery>

Lithium ion secondary batteries were produced in the same manner as in Example 5 except that the negative electrode mixture sheet produced as described above was used.

(Comparative Example 4)

Lithium ion secondary batteries were obtained in the same manner as in Comparative Example 3 except that the PTFE shown in Table 2 were used.

(Reference Example 1)

<Method for producing SiO negative electrode Slurry>

25.65 g of an artificial graphite powder as a negative electrode active material, 2.85 g of SiO, 2.0 g of polyacrylic acid as a binder, and 20 g of N-methylpyrrolidone (NMP) as a solvent were mixed in a mixer to prepare a SiO negative electrode mixture slurry. The slurry was homogeneously applied to a 20 $\mu$m copper foil, dried (110°C, 30 minutes), and then compression-formed using a press to produce a negative electrode sheet integrated with a current collector. The thickness of the electrode mixture layer was 95 $\mu$m.

<Production of battery>

Lithium ion secondary battery was produced in the same manner as in Example 5 except that the negative electrode sheet produced as described above was used.

Each test was carried out as follows.

[Measurement of moisture content]

The powdered PTFE was dried in a vacuum dryer at 50°C for 1 hour before use. Using a Karl Fischer moisture meter (ADP-511/MKC-510N, manufactured by Kyoto Electronics Industry Manufacturing Co., Ltd.) equipped with a boat-type moisture vaporizer, the moisture content of the PTFE after the vacuum drying was measured by heating to 210°C with the moisture vaporizer and measuring the vaporized moisture. Nitrogen gas was flowed as a carrier gas at a flow rate of 200 mL/min, and the measurement time was 30 minutes. Chem-Aqua was used as the Karl Fischer reagent. The sample amount was 1.5 g.

[PTFE fibril diameter (median value) (nm)]

(1) Using a scanning electron microscope (Model S-4800, manufactured by Hitachi, Ltd.), an enlarged photograph (7,000x) of the electrode mixture sheet was taken to obtain an image.
(2) Two lines equidistant from each other were drawn on the image in the horizontal direction to divide the image into three equal parts.
(3) The diameter of each PTFE fiber on the upper straight line was measured at three locations, and the average value was taken as the PTFE fiber diameter. The three locations to be measured were the intersection between the PTFE fiber and the straight line, and the locations 0.5 $\mu$m above and below the intersection (PTFE primary particles not formed into fibrils were excluded).
(4) The task of (3) above was then carried out for all the PTFE fibers on the lower straight line.
(5) Starting from the first image, the electrode mixture sheet was moved 1 mm in the right direction of the screen, photographed again, and the diameter of the PTFE fibers was measured according to the above (3) and (4). This was repeated until the number of fibers measured exceeded 80, and then the measurement was terminated.
(6) The median value of the diameters of all the PTFE fibers measured above was taken as the size of the fibril diameter.

As a reference, Figure 1 is a scanning electron microscope photograph showing the state of the cross section of the electrode mixture sheet used in Example 5.

[Strength measurement]

Using a tensile tester (Autograph AGS-X Series AGS-100NX manufactured by Shimadzu Corporation), the strength of a strip-shaped electrode mixture test piece with a width of 4 mm under the condition of 100 mm/min was measured. The chuck-to-chuck distance was 30 mm. Displacement was applied until breakage, and the maximum stress obtained in the measured results was taken as the strength of each sample. In Table 2, the value of Comparative Example 1 was standardized as 100%, and in Table 3, the value of Comparative Example 3 was standardized as 100%.

[Flexibility]

A 2 cm x 10 cm test piece was cut from the produced electrode mixture sheet. The test piece was wound around a round bar with a diameter of 4 mm, and then visually observed and evaluated according to the following criteria.

Good (circle): cracks were not observed
Fair (triangle): cracks were observed but breakage was not observed
Poor (cross): breakage was observed

<Battery test>

[Initial discharging capacity test]

The lithium ion secondary batteries produced as described above were, while sandwiched between boards, constant current-constant voltage charged (hereinafter referred to as CC/CV charge) (0.1C cut-off) at a current of 1C to 4.2 V at 25°C, and then discharged at a constant current of 1C to 3 V. With this procedure as 1 cycle, an initial discharging capacity was determined based on a discharging capacity from the 3rd cycle. In Table 2, the value of Comparative Example 1 was standardized as 100%, and in Table 3, the value of Comparative Example 3 was standardized as 100%.

[Storage test at 60°C for 2 weeks and measurement of gas yield]

The lithium ion secondary batteries produced as described above were, while sandwiched between boards, CC/CV charged (0.1C cut-off) at a current of 1C to 4.2 V, and then a battery volume was measured by Archimedes' method to define the volume before storage. Subsequently, the above fully charged batteries were put in a 60°C constant-temperature vessel and retained for 2 weeks. Then, these batteries were taken out from the constant-temperature vessel, allowed to stand for 2 hours at room temperature, and then a volume was measured by Archimedes' method to define the volume after storage. The difference between the volume after storage and the volume before storage was determined to define a gas yield (ml). In Table 2, the value of Comparative Example 1 was standardized as 100%, and in Table 3, the value of Comparative Example 3 was standardized as 100%.

```
(Volume after storage) - (Volume before storage) = gas

yield (ml)
```

[Resistance evaluation]

The batteries completed for the evaluation on the discharging capacity after 10 cycles at 25°C were charged at a constant current of 1C at 25°C to have a half of the initial discharging capacity. An impedance of the batteries was measured by applying 10 mV of AC voltage amplitude at 25°C to determine real axis resistance at 0.1 Hz. In Table 2, the value of Comparative Example 1 was standardized as 100%, and in Table 3, the value of Comparative Example 3 was standardized as 100%.

Test results are shown in Tables 2 and 3.

[Table 2]

| | | Positive electrode | | | | Negative electrode (slurry) | | | Evaluation | | | | | |
|---|---|---|---|---|---|---|---|---|---|---|---|---|---|---|
| | | Binder | Fibril diameter [nm] | Solvent | Active material | Binder | Solvent | Active material | Initial capacity | Gas | Resistance | Strength | Flexibility | Density g/cc |
| Comparative Example | 1 | PTFE-D | 76 | Non (dry) | NMC622 | SBR | Water | Artificial graphite | 100 | 100 | 100 | 100 | Poor | 3.8 |
| Comparative Example | 2 | PTFE-A | 71 | Non (dry) | NMC622 | SBR | Water | Artificial graphite | 125 | 100 | 100 | 120 | Poor | 3.8 |
| Example | 1 | PTFE-C | 41 | Non (dry) | NMC622 | SBR | Water | Artificial graphite | 144 | 97 | 90 | 181 | Good | 3.4 |
| Example | 2 | PTFE-B | 33 | Non (dry) | NMC622 | SBR | Water | Artificial graphite | 143 | 97 | 88 | 170 | Good | 3.4 |
| Example | 3 | PTFE-A | 47 | Non (dry) | NMC622 | SBR | Water | Artificial graphite | 149 | 96 | 88 | 208 | Good | 3.4 |
| Example | 4 | PTFE-B | 28 | Non (dry) | NMC622 | SBR | Water | Artificial graphite | 146 | 96 | 95 | 125 | Good | 3.4 |

[Table 3]

| | Negative electrode | | | | Positive electrode(slurry) | | | Evaluation | | | | | |
|---|---|---|---|---|---|---|---|---|---|---|---|---|---|
| | Binder | Fibril diameter [nm] | Solvent | Active material | Binder | Solvent | Active material | Initial capacity | Gas | Resistance | Strength | Flexibility | Density g/cc |
| Comparative Example 3 | PTFE-D | 85 | None (dry) | Artificial graphite SiO | PVDF | NMP | NMC 111 | 100 | 100 | 100 | 100 | Poor | 1.5 |
| Comparative Example 4 | PTFE-A | 76 | None (dry) | Artificial graphite SiO | PVDF | NMP | NMC 111 | 111 | 100 | 100 | 107 | Poor | 1.5 |
| Example 5 | PTFE-C | 41 | None (dry) | Artificial graphite SiO | PVDF | NMP | NMC 111 | 125 | 97 | 90 | 172 | Good | 1.5 |
| Example 6 | PTFE-B | 65 | None (dry) | Artificial graphite SiO | PVDF | NMP | NMC 111 | 124 | 97 | 88 | 197 | Good | 1.5 |
| Example 7 | PTFE-A | 51 | None (dry) | Artificial graphite SiO | PVDF | NMP | NMC 111 | 126 | 96 | 88 | 154 | Good | 1.5 |
| Example 8 | PTFE-B | 23 | None (dry) | Artificial graphite SiO | PVDF | NMP | NMC 111 | 125 | 98 | 98 | 124 | Good | 1.5 |
| Reference 1 | Polyacrylic acid | - | NMP | Artificial graphite SiO | PVDF | NMP | NMC 111 | 94 | 110 | 80 | - | Good | 1.5 |

From the results in Tables 2 and 3, the electrode mixture sheets of the Examples had excellent flexibility, and the physical properties of the secondary batteries were also good.

Industrial Applicability

Secondary battery electrode mixture of the present disclosure can be used for the production of lithium ion secondary batteries.

**Claims**

1. A secondary battery electrode mixture comprising an electrode active material and a binder, wherein

   the binder is a polytetrafluoroethylene resin, and
   the polytetrafluoroethylene resin has a fibrous structure with a fibril diameter (median value) of 70 nm or less.

2. The secondary battery electrode mixture according to claim 1, which is for a lithium ion secondary battery.

3. The secondary battery electrode mixture according to claim 1 or 2, obtained using a raw material composition including an electrode active material and a binder, wherein
   the binder in the raw material composition is a powdered polytetrafluoroethylene resin.

4. The secondary battery electrode mixture according to claim 3, wherein the raw material composition is substantially free of a liquid medium.

5. The secondary battery electrode mixture according to claim 3 or 4, wherein the powdered polytetrafluoroethylene resin has a moisture content of 500 ppm or less.

6. The secondary battery electrode mixture according to claim 3, 4, or 5, wherein the powdered polytetrafluoroethylene resin has a standard specific gravity of 2.11 to 2.20.

7. The secondary battery electrode mixture according to claim 3, 4, 5, or 6, wherein the powdered polytetrafluoroethylene resin includes 50% by mass or more of a polytetrafluoroethylene resin having a secondary particle size of 500 $\mu$m or more.

8. The secondary battery electrode mixture according to claim 3, 4, 5, or 6, wherein the powdered polytetrafluoroethylene resin includes 80% by mass or more of a polytetrafluoroethylene resin having a secondary particle size of 500 $\mu$m or more.

9. A secondary battery electrode mixture sheet comprising the secondary battery electrode mixture according to any one claim of claims 1 to 8.

10. The secondary battery electrode mixture sheet according to claim 9, which is for a negative electrode, wherein the electrode active material includes silicon as a constituent element.

11. The secondary battery electrode mixture sheet according to claim 9, which is for a positive electrode and has a density of 3.0 g/cc or more.

12. The secondary battery electrode mixture sheet according to claim 9 or 10, which is for a negative electrode and has a density of 1.3 g/cc or more.

13. A method for producing a secondary battery electrode mixture sheet comprising:

    (1) applying a shear force while mixing a raw material composition including an electrode active material and a binder;
    (2) forming the electrode mixture obtained in (1) into a bulk shape; and
    (3) rolling the bulk-shape electrode mixture obtained in (2) into a sheet shape,

    wherein the binder is a powdered polytetrafluoroethylene resin.

14. A secondary battery comprising the secondary battery electrode mixture sheet according to any claims of claims 9 to 12.

[Figure 1]

## INTERNATIONAL SEARCH REPORT

| International application No. |
|---|
| **PCT/JP2021/031851** |

| A. | CLASSIFICATION OF SUBJECT MATTER |
|---|---|

*H01M 4/13*(2010.01)i; *H01M 4/131*(2010.01)i; *H01M 4/139*(2010.01)i; *H01M 4/62*(2006.01)i
FI:    H01M4/62 Z; H01M4/13; H01M4/131; H01M4/139

According to International Patent Classification (IPC) or to both national classification and IPC

| B. | FIELDS SEARCHED |
|---|---|

Minimum documentation searched (classification system followed by classification symbols)

H01M4/13; H01M4/131; H01M4/139; H01M4/62

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

JSTPlus (JDreamIII)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2012-094331 A (ASAHI GLASS CO LTD) 17 May 2012 (2012-05-17) paragraphs [0013], [0019]-[0021], [0053],[0070] | 1-14 |
| A | JP 2015-508220 A (FRAUNHOFER-GESELLSCHAFT ZUR FOERDERUNG DER ANGEWANDTEN FORSCHUNG E.V) 16 March 2015 (2015-03-16) claims | 1-14 |
| A | JP 2015-015153 A (SEKISUI CHEMICAL CO LTD) 22 January 2015 (2015-01-22) claims | 1-14 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 October 2021** | **19 October 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2021/031851**

| Patent document cited in search report | Publication date (day/month/year) | Patent family member(s) | Publication date (day/month/year) |
|---|---|---|---|
| JP 2012-094331 A | 17 May 2012 | (Family: none) | |
| JP 2015-508220 A | 16 March 2015 | US 2015/0061176 A1 claims<br>EP 2820699 A1<br>DE 102012203019 A1<br>CN 104170125 A<br>KR 10-2014-0136952 A | |
| JP 2015-015153 A | 22 January 2015 | (Family: none) | |

Form PCT/ISA/210 (patent family annex) (January 2015)

**REFERENCES CITED IN THE DESCRIPTION**

**Patent documents cited in the description**

- JP 2017517862 W
- JP 2005527652 W
- WO 2015080291 A
- WO 2012086710 A
- WO 2012063622 A